# EUROPÄISCHE PATENTSCHRIFT

(11) **EP 1 423 746 B1**
(45) Veröffentlichungstag und Bekanntmachung des Hinweises auf die Patenterteilung: **15.06.2005**
(21) Anmeldenummer: 02776983.5
(22) Anmeldetag: 04.09.2002
(51) Int. Cl.: G02B 21/00, G02B 21/06

(54) **MIKROSKOP**
MICROSCOPE
MICROSCOPE

(30) Priorität: 05.09.2001 DE 10143481
(43) Veröffentlichungstag der Anmeldung: 02.06.2004
(60) Teilanmeldung: 05008916.8
(73) Patentinhaber: Europäisches Laboratorium für Molekularbiologie (EMBL), 69117 Heidelberg (DE)
(72) Erfinder: TISCHER, Christian, 69121 Heidelberg (DE); FLORIN, Ernst-Ludwig, 69251 Gaiberg (DE)
(74) Vertreter: Prechtel, Jörg, Dipl.-Phys. Dr.
(86) Internationale Anmeldenummer: PCT/EP2002/009901
(87) Internationale Veröffentlichungsnummer: WO 2003/023483

(56) Entgegenhaltungen:
- EP-A- 1 109 046
- WO-A-00/50878
- DE-A- 19 842 153
- US-A- 4 783 159
- US-A- 5 675 145
- PATENT ABSTRACTS OF JAPAN vol. 1998, no. 09, 31. Juli 1998 (1998-07-31) & JP 10 096862 A (BUNSHI BIO PHOTONICS KENKYUSHO:KK), 14. April 1998 (1998-04-14)
- TOKUNAGA M ET AL: "SINGLE MOLECULE IMAGING OF FLUOROPHORES AND ENZYMATIC REACTIONS ACHIEVED BY OBJECTIVE-TYPE TOTAL INTERNAL REFLECTION FLUORESCENCE MICROSCOPY" BIOCHEMICAL AND BIOPHYSICAL RESEARCH COMMUNICATIONS, ACADEMIC PRESS INC. ORLANDO, FL, US, Bd. 235, 1997, Seiten 47-53, XP001086476 ISSN: 0006-291X in der Anmeldung erwähnt

## Beschreibung

Die Erfindung betrifft ein Mikroskop umfassend
- ein Mikroskopgehäuse,
- ein Objektiv aus mindestens einem jeweils mindestens eine Linse umfassenden Linsensystem an einem Ende eines Durchgangs des Mikroskopgehäuses,
- wenigstens eine Beobachtungseinrichtung, insbesondere ein Okular, an einem anderen Ende des Durchgangs,
- eine Beleuchtungseinrichtung, deren Beleuchtungslicht von einer den Durchgang senkrecht schneidenden Eintrittsebene ausgehend wenigstens einen Beleuchtungsstrahl bildet, der durch das Linsensystem verläuft und in einem vorgegebenen Winkel auf einen Objektträger auftrifft.

Ein derartiges Mikroskop ist bekannt (Biochemical and Biophysical Research Communications, 235, 47 - 53). Es dient in erster Line der unter dem Begriff TIRM (= Total Internal Reflection Microscopy) bekannten Mikroskopiertechnik. Bei dieser wird der Beleuchtungsstrahl an einer zwischen dem Objektträger und dem Objekt gebildeten Grenzfläche totalreflektiert (Brechungsindex des Objektträgers größer als der Brechungsindex des Objekts), wobei der Beleuchtungsstrahl innerhalb des Objektträgers verläuft, so dass vom Reflexionspunkt ausgehend ein evaneszentes Lichtfeld in das Objekt eindringt mit exponentiellem Intensitätsabfall. Dieses Lichtfeld dient der streng lokal begrenzten Beleuchtung objektträgemaher Bereiche des Objektes. Diese Bereiche können dann in üblicher Weise über Objektiv und Beobachtungseinrichtung, z. B. ein Okular oder eine Kamera, des Mikroskops untersucht werden.

Bei einer von zwei möglichen TIRM-Anordnungen befindet sich das Objekt auf der dem Mikroskop zugewandten Seite des Objektträgers mit entsprechender Führung des Beleuchtungsstrahls nach Art einer Gegenlichtanordnung (siehe beispielsweise Nature Vol. 374, Seiten 555 - 559 oder Topics in Fluorescence Spetroscopy, Vol. 3, ed. by J. Lakowicz, Plenum Press, New York, 1992, Seite 314 ff.). Die hierzu alternative Auflichtanordnung mit Anordnung des Objekts auf der vom Mikroskop abgelegenen Seite des Objektträgers wird in dem eingangs genannten Stand der Technik angewandt. Das Beleuchtungslicht wird hier von einem Laser außerhalb des Durchgangs des Mikroskops ausgehend über ein Spiegelsystem auf einen dichroitischen Strahlteiler-Spiegel im Durchgang gerichtet und dann parallel zur optischen Achse dem Beobachtungsstrahlengang folgend durch das Objektiv hindurch auf Objektträger und Objekt gerichtet. Der dichroitische Spiegel beeinträchtigt hierbei die mikroskopische Objektbeobachtung, da er den gesamten Querschnitt des Durchgangs durchsetzt und damit die durch das Okular beobachtbare Lichtstrahlung wellenlängenabhängig schwächt.

Ein TIR-Mikroskop gemäß dem Oberbegriff des Anspruchs 1 ist aus der US 5,675,135 bekannt. Dieses TIR-Mikroskop ist grundsätzlich als Lichtrastermikroskop ausgebildet. Es umfasst neben einer in Gegenlichtanordnung zu einem Beleuchtungsstrahlengang angeordneten, in der Objektebene bewegbaren Lichtleitersonde zur punktförmigen Beobachtung des Objektfelds (Rasteranordnung) auch eine in Auflichtanordnung zur Beleuchtungsoptik angeordnete Okulareinrichtung zur zusätzlichen Beobachtung des gesamten ausgeleuchteten Objektfelds (z.B. zur Justage der Anordnung). Die bei der Auflichtanordnung erforderliche Trennung von Beleuchtungs- und Beobachtungslicht geschieht bei dem Mikroskop gemäß US 5,675,135 ohne Einsatz eines dichroitischen Strahlteilers zur Einkopplung des Beleuchtungslichts. Hierfür wird das von einer Lichtquelle als Parallelstrahl einfallende Beleuchtungslicht durch einen in einer so genannten projizierten Pupillenebene angeordneten, drehbaren Umlenkspiegel in den Mikroskoptubus eingekoppelt und mittels eines aus drei Linsen bestehenden optischen Projektions-Systems, welches die objektferne Brennebene der Objektivs vergrößert auf die projizierte Pupillenebene abbildet, auf die objektfeme Brennebene des Mikroskopobjektivs fokussiert. Der somit von der objektfernen Objektivbrennebene punktförmig ausgehende Beleuchtungsstrahl trifft als ein Bündel paralleler Lichtstrahlen unter einem Auftreffwinkel auf den Objektträger, der durch die radiale Position des Fokusses des Beleuchtungsstrahls in der objektfernen Objektivbrennebene vorbestimmt ist und größer gewählt wird als der Totalreflexionswinkel. Durch Verkippen des Umlenkspiegels lässt sich die radiale Position des Fokusses zur Einstellung des Auftreffwinkels verändern.

Der Erfindung liegt die Aufgabe zugrunde, ein Mikroskop der eingangs genannten Art mit möglichst geringer Beeinträchtigung der Mikoskopiermöglichkeiten, insbesondere hinsichtlich der möglichen Wellenlängen des Beleuchtungs- bzw. Beobachtungslichts, bereitzustellen.

Diese Aufgabe wird durch ein Mikroskop gemäß Anspruch 1 gelöst.

Der von der Eintrittsebene ausgehende wenigstens eine Beleuchtungsstrahl wird hierbei von einer optischen Einrichtung bereitgestellt, deren im Bereich der durch die Aperturblende des Objektivs definierten Objektivöffnung liegender Querschnitt wesentlich kleiner als die Objektivöffnung ist.

Die Position der Eintrittsebene kann in dem Durchgang zwischen der Frontlinse des Objektivs und der Beobachtungseinrichtung beliebig gewählt werden, wobei auch ein seitliche Einkopplung in die Frontlinse möglich ist. Dadurch, dass das Beleuchtungslicht auf wenigstens einen Beleuchtungsstrahl konzentriert wird, können dementsprechend lokal begrenzte Strahlführungselemente eingesetzt werden, die den Beobachtungsstrahiengang des Mikroskops allenfalls geringfügig beeinträchtigen (in aller Regel außerhalb der optischen Achse). Dieser feine Beleuchtungsstrahl kann ohne weitere Maßnahmen durch das durchstrahlte Linsensystem (ggf. die Front-linse) des Objektivs geschickt werden. Insbesondere kann auf die Verwendung jeglicher Strahlteilereinrichtungen, die den Durchgang durchsetzen, zur Einkopplung des Beleuchtungslichtes verzichtet werden.

Als Lichtquelle für das Beleuchtungslicht kommt beispielsweise ein Laser in Frage, der ein Beleuchtungsstrahlenbündel aus parallelen Einzelstrahlen mit im Wesentlichen punktförmigem Strahlquerschnitt abgibt. Es ist vorgesehen, dass der wenigstens eine Beleuchtungsstrahl in der der Beobachtungseinrichtung zugewandten Brennebene, im Folgenden auch hintere Brennebene genannt, des durchstrahlten Linsensystems des Objektivs in dem Punkt reell oder virtuell fokussiert ist. Hierdurch erreicht man, dass der vom Punkt in der Brennebene als divergierendes Strahlenbündel ausgehende Beleuchtungsstrahl nach Durchgang durch das Linsensystem von einem Strahlenbündel aus parallel verlaufenden Einzelstrahlen gebildet wird, die sämtliche in gleicher Weise die Totalreflexionsbedingung erfüllen.

Es ist vorgesehen, dass der wenigstens eine Beleuchtungsstrahl im Wesentlichen parallel zur optischen Achse durch das durchstrahlte Linsensystem des Objektivs verläuft. Der Beleuchtungsstrahl fällt hierbei ausserhalb der optischen Achse durch das durchstrahlte Linsensystem des Objektivs. Je weiter der Beleuchtungsstrahl in radialer Richtung von der optischen Achse entfernt durch das Linsensystem des Objektivs fällt, desto größer wird der Reflexionswinkel des Beleuchtungsstrahls an der Grenzfläche zwischen Objektträger und Objekt. Um die Totalreflexionsbedingung zu erfüllen, wird man deshalb bevorzugt eine Anordnung wählen, bei der der Belauchtungsstrahl in der Nähe des Randes der Aperturblende des Objektivs durch das durchstrahlte Linsensystem des Objektivs verläuft.

Es ist vorgesehen, dass der wenigstens eine Beleuchtungsstrahl in radialer Richtung in Bezug auf die optische Achse verlagerbar ist. Die seitliche Verlagerung lässt sich durch technisch einfache Mittel erreichen, insbesondere durch in radialer Richtung (in Bezug auf die optische Achse) verlagerbare Umlenkspiegel, Umlenkprismen oder dergleichen. Eine Verlagerung in radialer Richtung führt unmittelbar zu einer entsprechenden Veränderung des Reflexionswinkels an der Grenzschicht zwischen Objektträger und Objekt. Der von Fall zu Fall variierende Totalreflexionswinkel (abhängig von den Brechungsindizes von Objektträger und Objekt) läßt sich in gewünschter Weise einstellen. Weiterhin hängt die Eindringtiefe des Lichtfeldes in das Objekt hinter der Grenzfläche, an der Totalreflexion auftritt, vom Einfallswinkel des Lichtstrahls ab. Somit lässt sich die Tiefe des beleuchteten Objektvolumens durch die radiale Verlagerung des Beleuchtungsstrahls verändern. Weiterhin kann die Tiefe des beleuchteten Volumens auch durch die Wahl von Beleuchtungslicht unterschiedlicher Wellenlänge variiert werden. Da das erfindungsgemäße Mikroskop die Verwendung von Beleuchtungslicht beliebiger Wellenlängen zulässt, ist eine kontinuierliche Veränderung des beleuchteten Objektvolumens auch auf diese Weise möglich. Eine gezielte Veränderung des beleuchteten Objektvolumens und Beobachtung der Intensität des von diesem Volumen ausgehenden Lichtes lässt sich beispielsweise zur Bestimmung der Größe eines sich im Bereich dieses Objektvolumens befindlichen Objektes ausnutzen, da sich die Eindringtiefe des Beleuchtungslichtes aus seiner Wellenlänge und dem eingestellten Totalreflexionswinkel berechnen lässt (siehe hierzu, z. B. Topics in Fluorescence Spectroscopy, Vol. 3, Plenum Press, New York, 1992, Seite 289 ff.).

Ferner wird vorgeschlagen, dass der Divergenzwinkel des wenigstens. einen, von der Eintrittsebene ausgehenden Beleuchtungsstrahls veränderbar ist. Eine Veränderung des Divergenzwinkels hat eine dementsprechende Veränderung des Querschnitts des aus dem Linsensystem austretenden Beleuchtungsstrahls und damit der Größe des beleuchteten Bereichs im Objekt zur Folge.

Der Divergenzwinkel kann erfindungsgemäß durch Verstellung einer Aperturblende im Strahlengang des Beleuchtungsstrahls variiert werden oder durch Variation der Brennweite der den Beleuchtungsstrahl in der hinteren Brennebene fokussierenden optischen Einheit.

Wird eine möglichst gleichmäßige Ausleuchtung des Objekts verlangt, so wird bevorzugt ein inkohärenter Beleuchtungsstrahl eingesetzt. Ist dagegen erhöhte Ortsauflösung bzw. strukturierte Beleuchtung gewünscht, so wird bevorzugt ein bzw. mehrere im Wesentlichen kohärente Beleuchtungsstrahlen eingesetzt mit der Möglichkeit der Interferenz im Bereich des Objekts.

Befindet sich das zu beobachtende Objekt im Bereich der optischen Achse, so wie dies generell der Fall ist, wird der totalreflektierte Anteil des Beleuchtungsstrahls zumindest dann in das Objektiv zurückreflektiert, wenn der Objektträger senkrecht zur optischen Achse angeordnet ist. Normalerweise wird bei der TIR-Mikroskopie von dem beleuchteten Teil des Objekts ausgehendes Fluoreszenzlicht beobachtet, welches Informationen über das Objekt enthält. Um die mikroskopische Beobachtung des Objekts nicht zu beeinträchtigen, wird erfindungsgemäß der zurückreflektierte Anteil des Beleuchtungsstrahls, der Reflexionsstrahl, absorbiert, am besten durch einen Absorber oder einen Filter unmittelbar hinter dem durchstrahlten Linsensystem. Alternativ oder zusätzlich kann der Reflexionsstrahl auch detektiert werden, sei es zur Justage der Anordnung, insbesondere zur Einstellung des Totalreflexionswinkels und/oder für Absorptionsmessungen am Objekt. Hierfür kann eine Detektionseinrichtung im Bereich des Durchgangs vorgesehen sein. Durch die Beobachtung von Absorptionsvorgängen an der Grenzfläche zwischen Objektträger und Objekt in Abhängigkeit von der Wellenlänge des verwendeten Beleuchtungsstrahls können auch aus dem Reflexionsstrahl zusätzliche Informationen über das Objekt gewonnen werden. Hierfür ist insbesondere wichtig, dass Licht beliebiger Wellenlänge beobachtet werden kann, wie dies erfindungsgemäß der Fall ist.

Größere Freiheit in der Anordnung und Ausbildung der Detektionseinrichtung erhält man dann, wenn der Reflexionsstrahl mittels einer Umlenkeinheit im Bereich des Durchgangs aus dem Mikroskopstrahlengang herausgeführt wird. Eine entsprechende Umlenkeinheit kann auch zur Einkopplung des Beleuchtungsstrahls in das Mikroskop vorgesehen sein. Auch hier erhält man den Vorteil einer größeren Freiheit in der Anordnung und Ausgestaltung von Lichtquelle und Strahlführung mittels entsprechender optischer Systeme der Beleuchtungseinrichtung. Nichtsdestoweniger kann es in bestimmten Situationen, etwa wenn nicht ausreichend Raum für externe Lichtquellen zur Verfügung steht, von Vorteil sein, eine Lichtquelle mit möglichst punktförmigen Querschnitt, z. B. eine Laserdiode, direkt in den Durchgang im Bereich der Eintrittsebene zu plazieren.

In einer ersten Ausführungsform der Erfindung umfasst die Umlenkeinheit ein Prisma. Die Umlenkung erfolgt dann durch Totalreflexion an einer der Prismenflächen. Das Beobachtungsfeld des Mikroskops wird vom Prisma nur wenig beeinträchtigt. Es lässt sich in einfacher Weise haltern und montieren. Eine bewegliche Lagerung zur Justierung des Strahlengangs, insbesondere zur Anpassung des Reflexionswinkels durch Verschiebung in radialer Richtung, lässt sich mit geringem baulichem Aufwand verwirklichen. So kann beispielsweise ein Stabprisma eingesetzt werden mit Umlenkprismenfläche im Durchgang sowie Linearbewegungsführung und Halterung außerhalb des Durchgangs.

Je nach den gewünschten Anforderungen stehen Prismen in unterschiedlichen Formen und Ausbildungen zur Verfügung. In der Grundversion wird ein 90°-Prisma eingesetzt. Das Prisma kann abgerundet sein, um das Beobachtungsfeld möglichst wenig zu beeinträchtigen. An Stelle der 90°-Anordnung können auch andere Winkel gewählt werden. Besondere Vorteile hinsichtlich der Fexibilität der Einbringung des Beleuchtungsstrahls bietet die Kopplung einer Lichtfaser mit einem Umlenkprisma.

In Fällen, in denen eine Dispersion des Beleuchtungsstrahls vermieden werden soll oder die Wellenlänge des Beleuchtungsstrahls variiert wird, kann an Stelle des Prismas auch ein Umlenkspiegel eingesetzt werden. Im Allgemeinen wird man einen ebenen Umlenkspiegel einsetzen. Es ist jedoch auch der Einsatz eines gekrümmten Spiegels denkbar, der der Fokussierung des Strahls in der hinteren Brennebene dienen kann, so dass entsprechende Linsenelemente wegfallen können.

Bei der erfindungsgemäßen Anordnung wird wenigstens ein Beleuchtungsstrahl eingesetzt, wobei jeweiligen Anforderungen entsprechend auch mehrere Beleuchtungsstrahlen Verwendung finden können. In einem solchen Fall wird mit Vorteil eine Umlenkeinrichtung eingesetzt, in der eine entsprechende Vielzahl von Umlenkeinheiten baulich integriert ist. In diesem Falle ist die Umlenkeinrichtung bevorzugt angenähert ringförmig ausgebildet und konzentrisch zur optischen Achse angeordnet. An diesem Ring sind dann die entsprechend geneigten Reflexionsflächen (Spiegelflächen bzw. Prismenflächen) ausgebildet. Weiterhin ist es möglich, den Beleuchtungsstrahl durch einen gekrümmten Lichtleiter in den Strahlengang des Mikroskops einzuführen. In diesem Falle wird die Umlenkeinheit vom gekrümmten Lichtleiter selbst gebildet.

Die erfindungsgemäße Anordnung aus einzelnen Beleuchtungsstrahlen, insbesondere aus einem einzigen Beleuchtungsstrahl, ermöglicht die Beleuchtung des Objekts mit einem aus einer einzigen Richtung kommenden Beleuchtungsstrahl. Bei räumlich komplexen Gebilden, wie z. B. Zellen, können sich je nach Einstrahlrichtung des Beleuchtungsstrahls unterschiedliche Bilder des Objekts ergeben. Man erhält hierdurch zusätzlich Informationen über das Objekt. Es kann in solch einem Falle daher von Vorteil sein, wenn, wie erfindungsgemäß vorgeschlagen, die wenigstens eine Umlenkeinheit oder, falls eine Lichtquelle im Durchgang angeordnet ist, die Lichtquelle um die optische Achse rotierbar ist. Um den Reflexionsstrahl zu detektieren oder zu absorbieren, ist es zweckmäßig, ggf. auch die Detektions- bzw. Absorptionseinrichtung um die optische Achse zu drehen.

Die Rotation der Umlenkeinheit und damit die Rotation des auf die Probe einfallenden Beleuchtungsstrahls kann, wie ausgeführt, zwischen den Messungen vorgenommen werden, aber auch während einer Messung, um eine gleichmäßige Ausleuchtung des Objekts zu erhalten.

Da erfindungsgemäß über die wenigstens eine Umlenkeinheit das Beleuchtungslicht erst im Bereich des Objektivs in das Mikroskop eingekoppelt und ggf. dort auch wieder ausgekoppelt wird, kann der Beleuchtung des Objekts dienendes Licht, welches nicht Teil des Reflexionsstrahls ist und dennoch in das Mikroskop zurückreflektiert bzw. zurückgestreut ist, in einfacher Weise aus dem Beobachtungsstrahlengang entfernt werden, nämlich durch eine Filteranordnung auf der objektfernen Seite der wenigstens einen Umlenkeinheit.

Die erfindungsgemäße Beschränkung der Strahlführung des Beleuchtungsstrahls sowie des Reflexionsstrahls auf den Objektivbereich ermöglicht den Einsatz eines Adapters, der zwischen dem Objektiv und der Beobachtungseinrichtung angeordnet ist und der wenigstens die eine Umlenkeinheit oder ggf. die eine Lichtquelle aufweist. Mit Hilfe des Adapters lässt sich die Lichtquelle der Beleuchtungseinrichtung ohne Weiteres einkoppeln, wobei die Lichtquelle (im Falle dass sie sich nicht im Durchgang befindet) unabhängig von dem Adapter sein kann oder auch in den Adapter integriert sein kann. Wahlweise lässt sich der Adapter wieder entfernen oder gegen andere Adaptereinrichtungen austauschen, was einen vielfältigen Einsatz des Mikroskops zulässt. Bestehende Mikroskope können unter Umständen umgebaut bzw. nachgerüstet werden, indem bereits herkömmlicherweise vorgesehene Adaptereinsätze, insbesondere sog. DIC (Differentieller Interferenzkontrast)-Slider, die optische Komponenten aufweisen, welche zur DIC-Mikroskopie verwendet werden, gegen den erfindungsgemäßen Adapter ausgetauscht werden. Eine weitere einfache Möglichkeit, bestehende. Mikroskope nachzurüsten, bietet ein Adapter, der zwischen dem Objektiv und dem Objektivanschluss des Mikroskopgehäuses angeordnet ist. Idealerweise weist ein solcher Adapter auf seiner dem Objektiv zugewandten Seite einen gleichartigen Anschluss auf wie der Objektivanschluss des Mikroskopgehäuses, in den normalerweise das Objektiv eingepasst wird. Weiterhin ist es vorteilhaft, wenn der Adapter auf seiner dem Mikroskopgehäuse zugewandten Seite einen gleichartigen Anschluss wie der dem Mikroskopgehäuse zugewandte Anschluss des Objektivs aufweist. In diesem Fall kann der Adapter, ohne dass ein bestehendes Mikroskop umgebaut werden müsste, einfach zwischen Objektiv und Mikroskopgehäuse in den Durchgang eingesetzt werden, da sich in der Regel bei einem Mikroskop die Länge des Durchgangs zwischen der Beobachtungseinrichtung und dem objektivseitigen Anschluss des Mikroskopgehäuses verändern lässt.

Es ist sogar möglich, die Umlenkeinheit in einem entsprechend angepassten Objektiv zu integrieren. Die optischen Bauelemente können so optimal aufeinander abgestimmt werden. Auch bedarf es keines sonstigen Umbaus des Mikroskops, da lediglich ein herkömmliches Objektiv gegen ein erfindungsgemäßes auszutauschen ist.

In der Adapterbox bzw. dem erfindungsgemäßen Objektiv kann zusätzlich zur Umlenkeinheit die Lichtquelle integriert werden bzw. die Detektoreinrichtung für den Reflexionsstrahl.

Die Erfindung wird im Folgenden an mehreren Ausführungsbeispielen anhand der Zeichnung erläutert. Es zeigt:
- Figur 1: eine grob schematische Schnittdarstellung eines Mikroskops mit Auflichtanordnung und strichliert angedeutetem Adapter;
- Figur 2: eine Detailansicht (Pfeil A) der Anordnung in Figur 1 mit einer erfindungsgemäß ausgebildeten Ausführung eines Adapters und externer nicht dargestellter Lichtquelle;
- Figur 3: eine Ansicht entsprechend Figur 2 eines abgewandelten Adapters mit interner Lichtquelle;
- Figur 4: eine Schnittansicht ähnlich der Figuren 2 und 3 einer weiteren Ausführungsform des Adapters samt Objektiv unter Weglassung der übrigen Mikroskopbauteile mit Prisma als Umlenkeinheit;
- Figur 5: einen Schnitt der Anordnung gemäß Figur 4 nach Linie V-V in Figur 4;
- Figur 6: einen Schnitt ähnlich Figur 4 einer weiteren Ausführungsform des Adapters unter Weglassung eines objektfernen Teils des Adapters mit ebenem Spiegel als Umlenkeinheit;
- Figur 7: eine Ansicht ähnlich Figur 6 einer weiteren Ausführungsform des Adapters mit gekrümmten Spiegel als Umlenkeinheit;
- Figur 8: eine stark vereinfachte perspektivische Schemaansicht einer Umlenkeinrichtung aus konzentrisch angeordneten ringartig zusammenhängenden Umlenkelementen samt durch eine einzige Linse symbolisiertem Linsensystem und Objektträger mit Objekt und eingezeichnetem Strahlengang;
- Figur 9: eine Ansicht ähnlich Figur 6 mit prismatischem Umlenkelement und angekoppeltem Lichtleiter;
- Figur 10: eine Ansicht ähnlich Figur 9 mit von einem gekrümmtem Abschnitt des Lichtleiters gebildetem Umlenkelement;
- Figur 11: eine Schnittansicht mit im Objektiv integrierter Umlenkeinheit in Form eines Prismenstabs;
- Figur 12: eine Anordnung ähnlich Figur 11 mit im Objektiv integrierter Umlenkeinheit in Form eines Doppelprismas;
- Figur 13: eine Ansicht ähnlich Figur 11 mit an den Prismenstab angekoppeltem Lichtleiter und
- Figur 14: eine Anordnung ähnlich Figur 13 mit gekrümmtem Lichtleiterabschnitt als Umlenkeinheit.

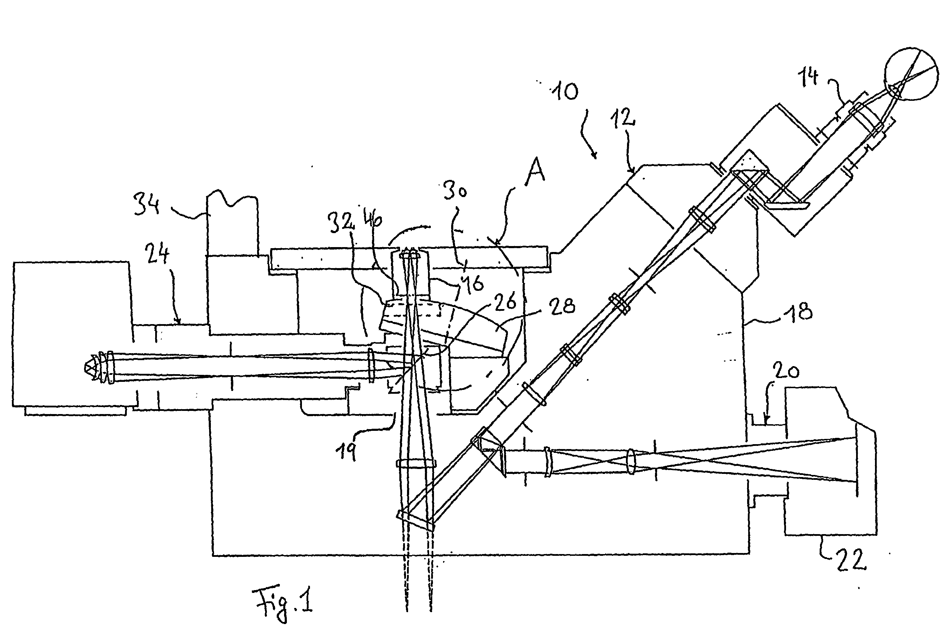

Die schematische Schnittzeichnung gemäß Figur 1 zeigt ein herkömmliches Mikroskop in invertierter Anordnung (Carl Zeiss Axiovert 100, 135, 135M, Carl Zeiss Jena). Von dem allgemein mit 10 bezeichneten Mikroskop sind die Hauptbestandteile erkennbar, nämlich ein visuelles Beobachtungsteil 12 mit Okular 14 an einem Ende des Strahlengangs und Objektiv 16 am anderen Ende und einer Vielzahl dazwischen geschalteter optischer Komponenten innerhalb eines Durchgangs 19 eines Mikroskopgehäuses 18. In den Strahlengang einkoppelbar ist der Strahlengang eines photographischen Beobachtungsteils mit im Umriss angedeuteter Kamera 22.

In den visuellen Strahlengang ist ferner der Strahlengang eines Beleuchtungsteils 24 einkoppelbar (über einen teildurchlässigen Spiegel 26 unterhalb eines das Objektiv 16 tragenden Objektivrevolverkopfes 28 mit Revolverdrehachse 30).

Bei dem herkömmlichen Mikroskop 10 ist eine in Figur 1 strichliert angedeutete Adapteraufnahme 32 vorgesehen, die der Aufnahme von Adaptern (DIC-Slider), insbesondere eines Wollaston-Prismas zur Beobachtung von Objekten im differentiellen Interferenzkontrast, dient.

An das Objektiv 16 schließt sich in Figur 1 nach oben hin ein in Figur 1 weggelassener Objektträger für das zu mikroskopierende Objekt an. Dieses wird in der dargestellten Anordnung durch das Beleuchtungsteil von Seiten des Beobachters her beleuchtet (Auflichtanordnung). Wird eine Durchleuchtung des Objekts gewünscht, so kann ein in Figur 1 nicht dargestelltes Beleuchtungsteil für eine entsprechende Beleuchtung der Probe (in Figur 1 von oben her) an einem in Figur 1 abgebrochen dargestellten nach oben vom Mikroskop 10 abstehenden Träger 34 angeordnet sein.

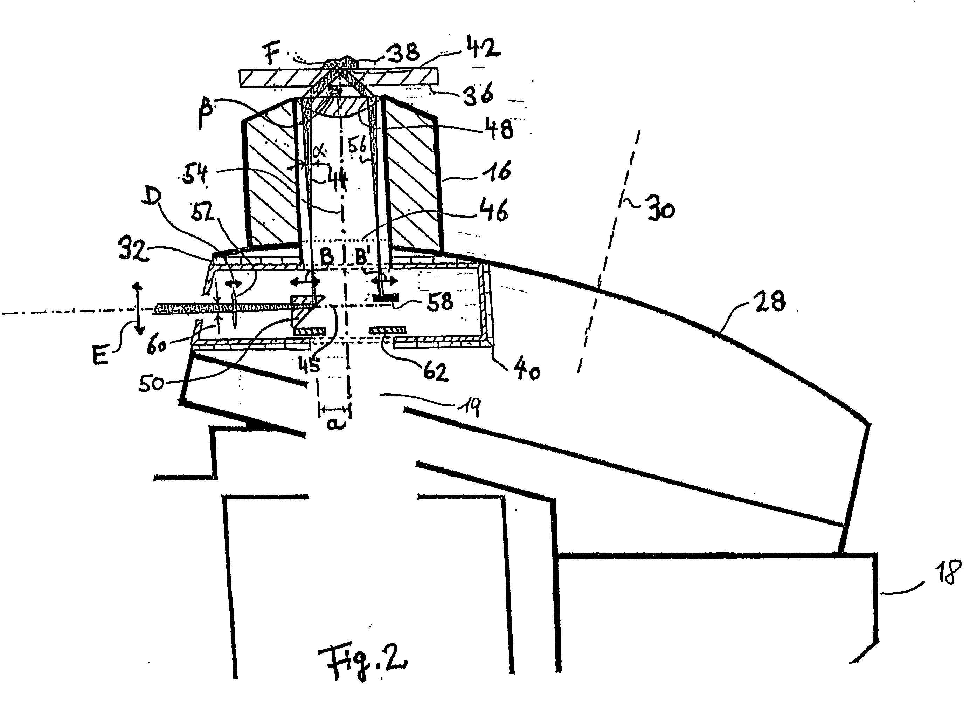

In Figur 2 ist der in Figur 1 durch die Kreisfläche A angedeutete Bereich des Revolverkopfs 28 vergrößert dargestellt samt Objektträger 36 und Objekt 38 auf dessen Oberseite (vom Objektiv 16 abgewandte Seite des von einem Glasplättchen gebildeten Objektträgers 36).

In die Aufnahme 32 ist ein erfindungsgemäßer Adapter 40 an Stelle eines herkömmlichen Adapters eingeschoben. Dieser Adapter 40 ist also ohne weiteren Umbau des bekannten Mikroskops 10 einsetzbar. Er dient der Beleuchtung des Objekts 38 gemäß dem an sich bekannten Prinzip der TIR (Total Internal Reflection) -Mikroskopie.

Bei dieser Mikroskopiertechnik wird an einer zwischen Objektträger 36 und Objekt 38 gebildeten Grenzfläche 42 von der Objektträgerseite her kommendes Licht totalreflektiert (Brechungsindex des Objekts kleiner als der Brechungsindex des Objektträgers). Vom Totalreflexionpunkt aus erstreckt sich ein sogenanntes evaneszentes Beleuchtungsfeld in das Objekt hinein, welches exponentionell mit dem Abstand von der Grenzfläche abfällt. Man erhält so eine in axialer Richtung lokal sehr scharf begrenzte Art der Beleuchtung. Um den Totalrefelxionswinkel zu erhalten wird ein Objektiv mit genügend hoher numerischer Apertur NA eingesetzt. Beispielsweise muss bei einer Glas-Wasser-Grenzfläche ein Objektiv mit hoher numerischer Apertur (NA > 1,33) eingesetzt werden, um den Totalreflexionswinkel zu erhalten.

Die Eindringtiefe dieses Feldes hängt hierbei vom jeweiligen Reflexionswinkel β ab (der der Totalreflexionsbedinung weiterhin genügt). Dementsprechend lässt sich durch Veränderung des Reflexionswinkels β auch die Beleuchtungstiefe variieren.

Erfindungsgemäß wird ein im Querschnitt stark begrenzter Beleuchtungsstrahl 44 verwendet. Die Begrenzung ist derart, dass er in der hinteren Brennebene 46 des Objektivs 16 im Wesentlichen einen Punkt bildet. Hierbei ist diejenige Brennebene gemeint, die dem vom Beleuchtungsstrahl 44 durchstrahlten Linsensystem des Objektivs 16 (in Figur 2 durch eine einzige Frontlinse 48 angedeutet) entspricht. Es könnten daher hinter der Einkoppelstelle (Prisma 50) des Beleuchtungsstrahls 44 je nach Bauart des Objektivs 16 durchaus noch weitere Linsen oder Linsensysteme des Objektivs 16 angeordnet sein (in Richtung zum Okular).

Bei Verwendung eines feinen Laserstrahls als Beleuchtungsstrahl 44 könnte dieser ohne Einsatz von Fokussierungslinsen durch das frontseitige Linsensystem (symbolisiert durch die Frontlinse 48) geschickt werden, wenn auch eine schwache Divergenz des aus der Frontlinse austretenden Strahls unvermeidlich ist, da die vor der Frontlinse noch parallelen Teilstrahlen anschließend auf den Brennpunkt F strahlenförmig zulaufen. Dementsprechend unterscheiden sich die Reflexionswinkel dieser Teilstrahlen voneinander geringfügig. Dies mag in manchen Fällen in Kauf genommen werden können.

Theoretisch absolute Parallelität der Teilstrahlen nach Durchgang durch die Frontlinse 48 des Objektivs erhält man dann, wenn der Beleuchtungsstrahl mit Hilfe entsprechender optischer Elemente (in Figur 2 durch eine Linse 52 angedeutet) in die hintere (okularseitige) Brennebene 46 fokussiert wird. Es ergeben sich dann nach Durchgang durch die Frontlinse 48 zwangsläufig parallele Teilstrahlen des Beleuchtungsstrahls 44 mit einem gemeinsamen Reflexionswinkel β entsprechend dem Abstand a des Teilstrahls 44 von der optischen Achse 54 des Objektivs 16. Der Grad der Aufweitung des Beleuchtungsstrahls 44 nach Durchgang durch die Frontlinse 48 ist durch den Divergenzwinkel a des in der hintere Brennebene 46 fokussierten Beleuchtungsstrahls 44 festgelegt.

Mit Hilfe des bereits erwähnten Prismas 50 wird der von einer nicht dargestellen Beleuchtungsquelle (in Figur 2 links vom Revolverkopf 28) herkommende Beleuchtungsstrahl rechtwinklig umgelenkt, so dass er parallel zur optischen Achse 54 und mit Abstand a zu dieser verläuft. Hierbei ist der in dem Durchgang 19 befindliche Querschnitt des Prismas 50 wesentlich kleiner als der Gesamtquerschnitt des Durchgangs 19. Aus diesem Grunde ist es nicht erforderlich, zur Einkopplung des Beleuchtungsstrahls einen Strahlteiler, z. B. einen dichroitischen Spiegel, zu verwenden, der eine Transmission des vom Objekt herkommenden Beobachtungslichtes zulässt, da durch das Prisma 50 lediglich ein kleiner Teil des Beobachtungsfeldes des Mikroskops verdeckt wird. Der Abstand a kann erfindungsgemäß in besonders einfacher Weise dadurch variiert werden, dass das Prisma 50 entweder in Richtung parallel zur optischen Achse 54, oder wie dargestellt in radialer Richtung (Doppelpfeil B) verschoben wird. Mit dem Abstand a ändert sich der Reflexionswinkel β des Beleuchtungsstrahls 44 und damit nach Überschreiten des Totalreflexionswinkels die Eindringtiefe in das Objekt. Damit auch nach der Verschiebung des Prismas 50 der Fokus des Beleuchtungsstrahls 44 in der Brennebene 46 liegt, müssen die im Strahlengang vorgesehenen optischen Bauelemente (symbolisiert durch die Linse 52) dementsprechend in ihrer Lage angepasst werden. Falls wie in Figur 2 der Beleuchtungsstrahl rechtwinklig umgelenkt wird, ist es besonders vorteilhaft, die Umlenkeinheit und die der Fokussierung dienenden optischen Elemente auf einem gemeinsamen Träger zu montieren, da dann nur dieser Träger in radialer Richtung verlagerbar sein muss.

In der in Figur 2 dargestellten Anordnung mit zur optischen Achse 54 senkrechter Grenzfläche 42 zwischen Objektträger 36 und Objekt 38 tritt der Beleuchtungsstrahl nach Reflexion an der Grenzfläche 42 (nunmehr Reflexionsstrahl 56 genannt) wieder durch die Frontlinse 48 in das Objektiv 16 ein (symmetrisch zum Beleuchtungsstrahl 44). Damit der Reflexionsstrahl 56 nicht die mikroskopische Beobachtung des Objekts 38 stört, wird dieser in der Ausführungsform gemäß Figur 2 durch einen Absorber 58 absorbiert, der hier an einer dem Ort des Prismas 50 entsprechenden Stelle auf der anderen Seite der optischen Achse 54 angeordnet ist. Um möglichst wenig die mikroskopische Beobachtung zu stören, kann der Absorber 58 jeweils möglichst weit radial nach außen gezogen werden, was durch den Doppelpfeil B' angedeutet ist.

Zu erwähnen ist noch die Aperturblende 60 vor der Linse 52, die den Strahlquerschnitt des Beleuchtungsstrahls 44 begrenzt und damit über den Divergenzwinkel α den Grad der Aufweitung des Beleuchtungsstrahls 44 nach Durchgang durch die Frontlinse 48 festlegt. Eine weitere Möglichkeit, den Divergenzwinkel α zu verändern, besteht darin, die Brennweite der Linse 52 zu variieren, wobei dann die Position der Linse 52 (siehe Doppelpfeil D) und ggf. die gemeinsame Position von Linse 52 und Prisma 50 in axialer Richtung (siehe den Doppelpfeil E) so nachgeführt werden müssen, dass der Beleuchtungsstrahl weiterhin in der hinteren Brennebene 46 fokussiert ist.

Im Bedarfsfall kann der Adapter 40 wieder aus der Aufnahme 32 herausgezogen und ggf. durch einen herkömmlichen Adapter ersetzt werden. Ferner kann der Adapter auch ohne Weiteres in Verbindung mit beliebigen anderen Objektiven des Revolverkopfes 28 eingesetzt werden, da üblicherweise jedem Objektiv eine Aufnahme 32 zugeordnet ist.

Zum optischen Aufbau sei noch ergänzt, dass in den Durchgang 19 zwischen der Einkoppelstelle des Beleuchtungsstrahls (Prisma 50) und der Beobachtungseinrichtung eine zusätzliche Aperturblende 62 (in Figur 2 unterhalb des Prismas 50 angedeutet) eingesetzt werden kann. Diese blendet das Prisma 50 aus dem Beobachtungsstrahlengang aus und verhindert dadurch eventuell störende asymmetrische Beugungsbilder (Bildverzerrungen) der Objekte durch das in den Beleuchtungsstrahlengang eingebrachte Prisma 50. Die etwas reduzierte numerische Apertur und Auflösung kann in Kauf genommen werden.

Eine weitere Variation der Art der Beleuchtung des Objekts 38 kann dadurch erzielt werden, dass man das Prisma 50 samt den vorgeschalteten optischen Bauelementen (Linse 52) parallel zur optischen Achse 54 verlagert. Sofern man dabei aus dem Fokus in der hinteren Brennebene 46 gelangt, ergibt sich eine gewisse Divergenz des auf die Grenzfläche 42 auftreffenden Strahls sowie eine Änderung des Grads der Aufweitung.

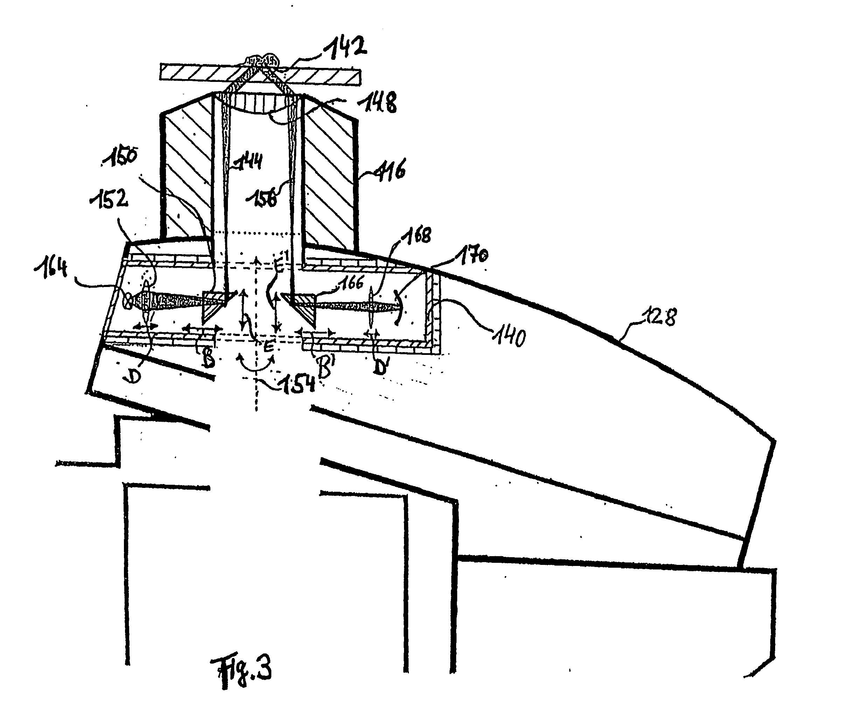

Figur 3 zeigt eine weitere mit 140 bezeichnete Ausführungsform des Adapters 40 gemäß Figur 2. Dementsprechend sind auch die übrigen Bauteile, sofern sie ihre Entsprechung in Bauteilen des Adapters 40 haben, mit denselben Bezugsziffern, jeweils vermehrt um die Zahl 100, versehen.

Im Gegensatz zum Adapter 40 mit externer Lichtquelle ist beim Adapter 140 die Lichtquelle 164 in den Adapter 140 integriert. Es schließt sich die Linse 152 sowie das Prisma 150 an. Nach Durchgang durch die Frontlinse 148 des Objektivs 116 und Totalreflexion an der Grenzfläche 142 wird der Beleuchtungsstrahl 144 bzw. der Reflexionsstrahl 156 durch ein weiteres Prisma 166 um 90° abgelenkt (diametral zum Prisma 150 samt Lichtquelle 164) und nach Durchgang durch eine Linse 168 in einem Detektor 170 aufgefangen. Durch den Detektor 170 läßt sich zum einen die optische Anordnung gezielt justieren, insbesondere der Totalreflexionswinkel in Abhängigkeit von der Position des Prismas 150 sowie ein gewünschter Bereich nach Überschreitung des Totalreflexionswinkels. Andererseits lassen sich unter Umständen lokale Brechungsindex-Änderungen, Absorptionsvorgänge oder dgl. im Bereich der Grenzfläche 142 erfassen. Dabei ist auch eine Wellenlängenvariation des Lichts der Lichtquelle 164 denkbar.

Mit den Doppelpfeilen B und B' ist wiederum die radiale Justierbarkeit der Prismen 150, 166 andedeutet, mit den Doppelpfeilen E und E' die Beweglichkeit der Prismen 150 bzw. 166 samt Lichtquelle 164 und Linse 152 bzw. Detektor 170 und vorgeschalteter Linse 168 parallel zur optischen Achse 154, mit D, D' die Justierbeweglichkeit der Linsen 152, 168.

Prinzipell ist es auch denkbar, den Adapter 140 derart auszubilden, dass er um die optische Achse 154 wahlweise rotiert werden kann. Dies bietet den Vorteil, dass bei Objekten mit anisotropen optischen Eigenschaften die Einstrahlrichtung des Beobachtungsstrahls 144 wahlweise variiert werden kann. Auch kann man wahlweise durch Rotation während der Messung eine gleichmäßige Ausleuchtung des Objekts erhalten.

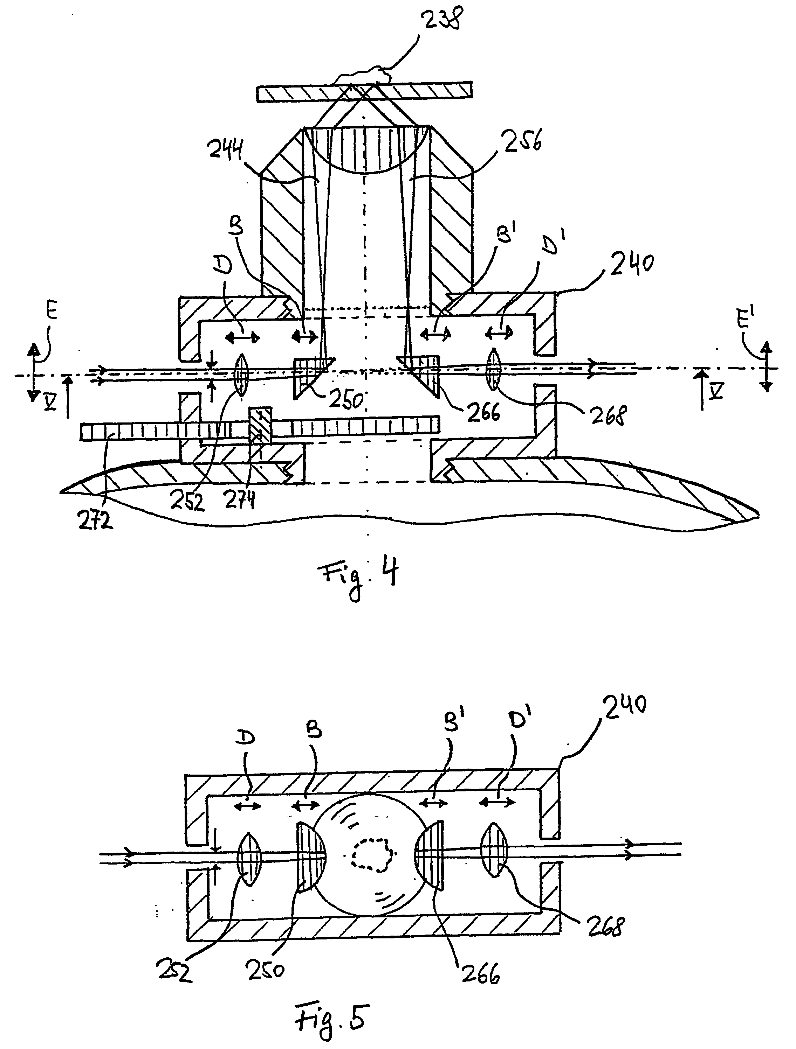

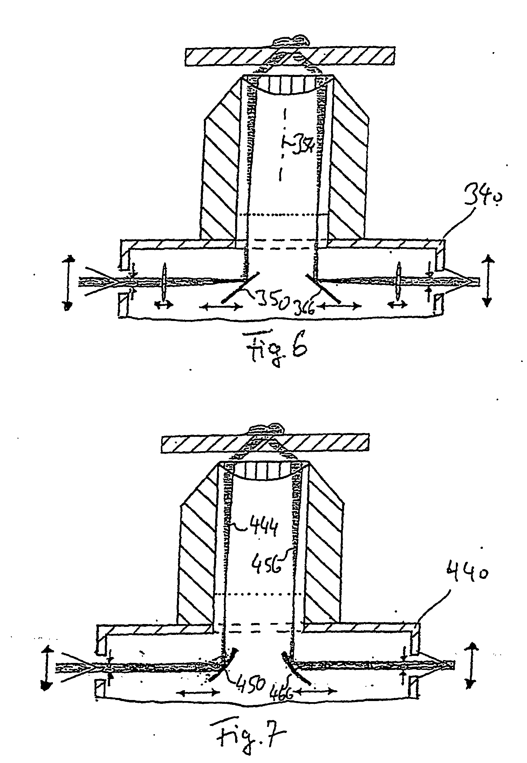

Figuren 4 und 5 zeigen in Seitenansicht bzw. Schnittansicht eine weitere Ausführungsform des erfindungsgemäßen Adapters, der nunmehr mit 240 bezeichnet ist. Seine Bauelemente, die ihrer Funktion nach solchen der Figur 3 entsprechen, sind mit denselben Bezugsziffern, jeweils vermehrt um die Zahl 100, versehen.

Auch hier sind für die Einkopplung des Beleuchtungsstrahls 244 bzw. zur Auskopplung des Reflexionsstrahls 256 Prismen 250, 266 vorgesehen mit vorgeschalteten Linsen 252, 268. Im Unterschied zur Ausführungsform gemäß Figur 3 wird der Reflexionsstrahl 256 aus dem Adapter 240 herausgeführt und einer nicht dargestellten Detektionseinrichtung zugeführt. Auch die nicht dargestellte Lichtquelle befindet sich (in Entsprechung zu Figur 2) außerhalb des Adapters 240. Die Justiermöglichkeiten sind die gleichen wie bei der Ausführungsform gemäß Figur 3; was durch die entsprechenden Doppelpfeile D, D', B, B' und E; E' angedeutet ist.

Der Adapter 240 ist zwischen dem Objektiv 216 und dem Revolverkopf 228 angeordnet. Er weist an seiner dem Objektiv zugewandten Seite einen Anschluss 290 auf, der dem Objektivanschluss 292 des Revolverkopfes 228, in den normalerweise das Objektiv 216 eingepasst wird, entspricht. Auf seiner dem Revolverkopf 228 zugewandten Seite weist der Adapter 240 einen Anschluss 286 auf, der dem okularseitigen Anschluss 288 des Objektivs 216, der normalerweise in den Objektivanschluss 292 des Revolverkopfes 228 eingepasst wird, entspricht. Auf diese Weise kann der Adapter 240 in einfacher Weise in ein bestehendes Mikroskop integriert werden, ohne dass dieses umgebaut werden muss.

Die beiden Prismen 250, 266 weisen abgerundete Reflexionsflächen auf, um die mikroskopische Beobachtung möglichst wenig zu beeinträchtigen (siehe Figur 5). Desweiteren ist in dem Adapter 240 auf der vom Objekt 238 abgewandten Seite der Prismen 250, 266 ein Filterrad 272 mit Drehachse 274 im Beobachtungsstrahlengang angeordnet. Es lassen sich damit beispielsweise diejenigen Anteile des Beleuchtungsstrahls 244, die nicht als Reflexionsstrahl 256 wieder aus dem Adapter 240 ausgekoppelt werden (insbesondere diffus gestreute Anteile), aus dem Beobachtungsstrahlengang herausfiltern. Dies ist insbesondere bei Fluoreszenzmessungen von Vorteil.

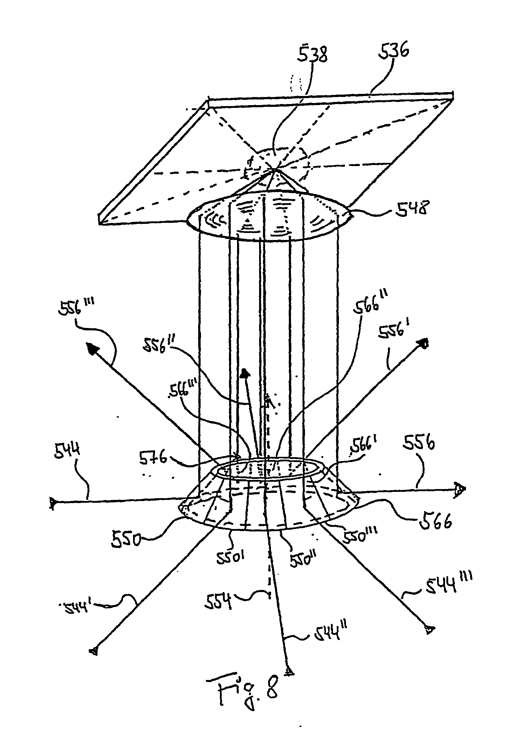

Die in Figur 6 dargestellte Ausführungsform des erfindungsgemäßen Adapters ist mit 340 bezeichnet. Er unterscheidet sich von dem gemäß den Figuren 4 und 5 lediglich darin, dass die Prismen 250, 266 ersetzt sind durch ebene Spiegel 350, 366. Durch Verlagerung des Spiegels 350 in Richtung senkrecht zur optischen Achse 354 (unter Beibehaltung der Raumorientierung) läßt sich der Totalreflexionswinkel in gleicher Weise wie beim Einsatz eines Prismas verändern.

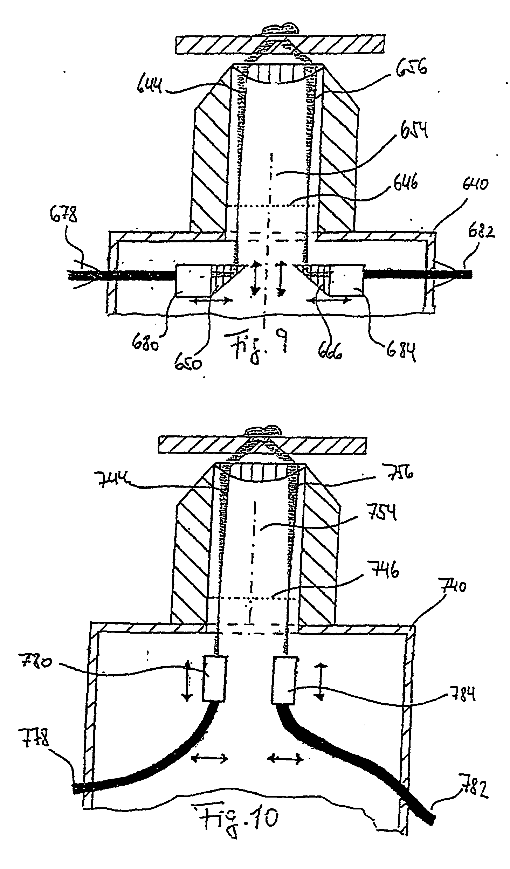

Bei der mit 440 bezeichneten Ausführungsform des Adapters gemäß Figur 7 sind die beiden ebenen Spiegel 350, 366 gemäß Figur 6 ersetzt durch gekrümmte Spiegel, insbesondere Hohlspiegel 450, 466. Die Einkopplung und Fokussierung des Beleuchtungsstrahls 440 kann dann unter Umständen ohne weitere optische Elemente wie eine vorgeschaltete Linse entsprechend den vorstehend beschriebenen Ausführungsformen erfolgen. Hierzu symmetrisch erfolgt die Strahlführung des Reflexionsstrahls 456 durch den Spiegel 466.

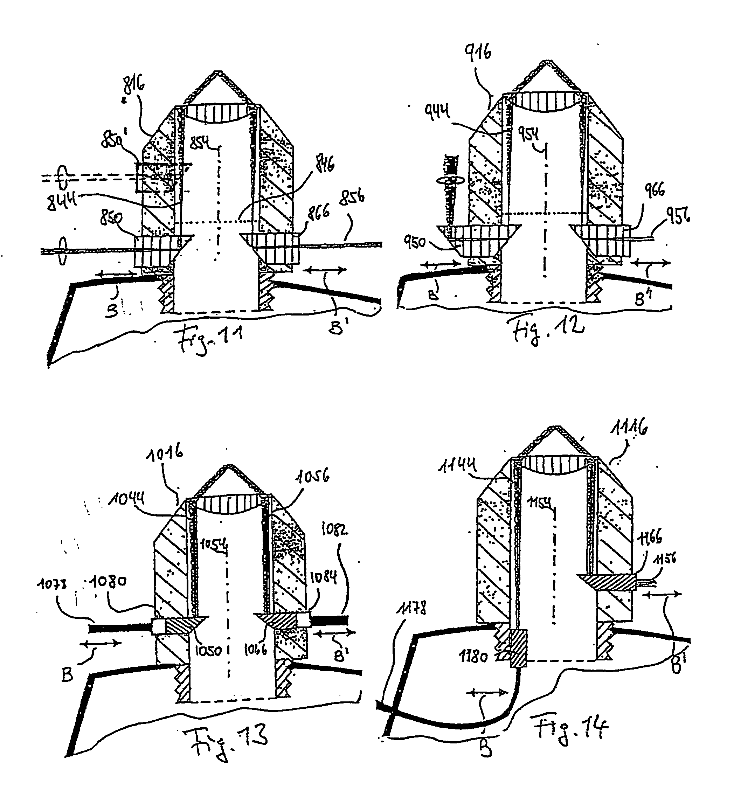

Figur 8 zeigt in einer stark vereinfachten perspektivischen Schemaansicht eine Umlenkeinrichtung 576, die zur Einkopplung mehrerer Beleuchtungsstrahlen 544, 544', 544' ', 544''' und zur Auskopplung der entsprechenden Reflexionsstrahlen 556, 556', 556' ', 556' ' ' verwendet wird.

Die Umlenkeinrichtung 576 besteht dabei aus konzentrisch angeordneten, ringartig zusammenhängenden Umlenkelementen, die in Figur 8 als trapezförmige Spiegel 550, 550', 550' ', 550'''. 566, 566', 566'', 566' ' ' dargestellt sind. Hierbei wird jeweils ein Beleuchtungsstrahl, z. B. der mit dem Bezugszeichen 544 versehene, an dem jeweiligen Umlenkelement, z. B. 550, reflektiert, so dass er nach der Reflexion parallel zu optischen Achse 554 verläuft und durch das Objektiv 548 auf den Objektträger 536 mit dem Objekt 538 abgebildet wird. Der an der Grenzfläche zwischen Objektträger 536 und Objekt 538 totalreflektierte Beleuchtungsstrahl, z. B. 544, fällt als Reflexionsstrahl, z. B. 556, nach erneutem Durchgang durch das Objektiv 548 parallel zur optischen Achse 554 auf das Umlenkelement, z. B. 566, wo er erneut reflektiert wird, so dass er aus dem Strahlengang des Mikroskops ausgekoppelt wird. Durch die in Figur 8 gezeigte Anordnung ist es möglich, das Objekt 538 gleichzeitig aus mehreren Richtungen zu beleuchten, wobei jeder der Beleuchtungsstrahlen 544 - 544 ' ' ' in gleicher Weise der Totalreflexionsbedingung genügt.

In den Figuren 9 und 10 sind weitere Ausführungen des bereits in den Figuren 2 - 7 gezeigten Adapters als Seitenansicht dargestellt. Die Bauelemente dieser mit den Bezugszahlen 640 und 740 bezeichneten Adapter, deren Funktion solchen des in Figur 4 gezeigten Adapters entsprechen, sind mit denselben Bezugsziffern, jedoch jeweils erhöht um die Zahl 400 bzw. 500 versehen.

Bei den in den Figuren 9 und 10 dargestellten Ausführungsformen des Adapters 640 und 740 wird das Beleuchtungslicht über einen Lichtleiter 678 bzw. 778, beispielsweise eine Glasfaser, in den Adapter 640 bzw. 740 eingeführt. An den Lichtleiter 678 bzw. 778 schließt sich eine, z. B. aus Mikrolinsen aufgebaute, Adapteroptik 680 bzw. 780 an, um den aus dem Lichtleiter 678 bzw. 778 austretenden Beleuchtungsstrahl 644 bzw. 744 in der hinteren Brennebene 646 bzw. 746 zu fokussieren.

Bei der in Figur 9 dargestellten Ausführung wird der Lichtleiter 678 senkrecht zur optischen Achse 654 in den Adapter 640 eingeführt, so dass er über eine Umlenkeinheit, die in Figur 9 als Prisma 650 dargestellt ist, in eine Richtung parallel zur optischen Achse 654 umgelenkt werden muss. Demgegenüber ist der Lichtleiter 778 bei dem in Figur 10 dargestellten Ausführungsbeispiel gekrümmt, so dass der die Adapteroptik 780 verlassende fokussierte Beleuchtungsstrahl 744 bereits parallel zur optischen Achse 754 ist.

In beiden Ausführungsbeispielen kann eine Auskopplung des Reflexionsstrahls 656 bzw. 756 mit Hilfe von optischen Elementen, die den zur Einkopplung verwendeten entsprechen, erfolgen. In Figur 9 ist dies durch das Prisma 666 und den Lichtleiter 682, der über die Adapteroptik 684 mit dem Prisma 666 verbunden ist, realisiert. In Figur 10 erfolgt dies durch den Lichtleiter 782 und die an seinem Ende angebrachte Adapteroptik 784, die bezüglich der optischen Achse 754 symmetrisch zu der zum Einkoppeln des Beleuchtungsstrahls 744 verwendeten Adapteroptik 780 angebracht ist.

Die Figuren 11 - 14 zeigen Ausführungen der vorliegenden Erfindung, bei denen die Umlenkeinheiten, die zum Einkoppeln des Beleuchungsstrahls bzw. zum Auskoppeln des Reflexionsstrahls dienen, in einem speziellen Objektiv 816, 916, 1016, 1116 intregiert sind. Bauelemente, die ihrer Funktion nach solchen in den vorangehenden Figuren gezeigten entsprechen, sind in den Figuren 11 -14 mit denselben Bezugsziffern, jedoch jeweils um die Zahl 100 erhöht, bezeichnet. Gegenüber den Ausführungen, bei denen die Umlenkeinheiten in einem Adapter integriert sind, bieten die in den Figuren 11 - 14 dargestellten Ausführungen den Vorteil, dass die für die Umlenkeinheiten nötigen optischen Bauteile an das Linsensystem des Objektivs 816, 916, 1016, 1116 angepasst werden können, wodurch insgesamt die Qualität der optischen Abbildung optimiert werden kann. Darüber hinaus können solche speziellen Objektive auch für Mikroskope verwendet werden, die nicht über eine Adapteraufnahme wie in Figur 2 dargestellt verfügen.

In Figur 11 wird der Beleuchtungsstrahl 844 über ein Stabprisma 850 in den Strahlengang des Mikroskops eingekoppelt. Ebenso wird der Reflexionsstrahl 856 über ein weiteres Stabprisma 866 aus dem Objektiv 816 herausgeführt. Hierbei sind beide Prismen 850, 866 im Bereich des Objektivs so angeordnet, dass sie zur Einstellung des Reflexionswinkels im Strahlengang des Mikroskops in radialer Richtung verschiebbar sind (gezeigt durch die Doppelpfeile B, B' in Figur 11). Eine alternative Anordnung des Stabprismas 850 ist in Figur 11 strichliert angedeutet. Bei dieser Anordnung befindet sich das Stabprisma 850' zum Einkoppeln des Beleuchtungsstrahls 844 zwischen der durchstrahlten Frontlinse des Objektivs und seiner okularseitigen Brennebene 846. Der Beleuchtungsstrahl 844 wird in diesem Fall virtuell auf die okularseitige Brennebene 846 des durchstrahlten Linsensystems fokussiert. Diese Anordnung erlaubt eine besonders Platz sparende Bauweise eines speziellen Objektivs mit integrierter Umtenkeinheit.

Bei dem in Figur 12 gezeigten Ausführungsbeispiel wird im Unterschied zu Figur 11 zum Einkoppeln des Beleuchtungsstrahls 944 ein Doppelprisma 950 verwendet, durch das der Beleuchtungsstrahl 944 um 180° umgelenkt werden kann.

Bei den in Figur 13 und Figur 14 dargestellten Ausführungsbeispielen werden Lichtleiter 1078, 1082, 1178, verwendet, um das von einer nicht dargestellen Lichtquelle kommende Beleuchtungslicht im Bereich des Objektivs in den Strahlengang des Mikroskops einzukoppeln bzw. auszukoppeln. Bei der in Figur 13 dargestellten Anordnung, die der in Figur 9 ähnlich ist, wird eine an dem Lichtleiter 1078 angebrachte Adapteroptik 1080 und ein an die Adapteroptik 1080 sich anschließendes Prisma 1050 zur Einkopplung des Beleuchtungsstrahls 1044 verwendet. Die Auskopplung des Reflexionsstrahls 1056 erfolgt durch ein bezüglich der optischen Achse 1054 symmetrisch angeordnetes Prisma 1066 und eine sich daran anschließende Adapteroptik 1084, an die ein Lichtleiter 1082 angekoppelt ist. Im Unterschied wird dazu in Figur 14 eine Ausführung gezeigt, bei der ein gekrümmter Lichtleiter 1178 mit einer Adapteroptik 1180, die parallel zur optischen Achse 1154 ausgerichtet ist, verbunden wird, um den Beleuchtungsstrahl 1144 parallel zur optischen Achse in den Strahlengang des Mikroskops einzukoppeln.

In den Figuren 1 - 14 werden verschiedene Ausführungsformen eines Mikroskops beschrieben, welches insbesondere zur TIR-Mikroskopie verwendet werden kann. Dabei wird das Mikroskop in einer Auflichtanordnung betrieben, bei der das zur Beleuchtung des Objekts dienende Licht durch wenigstens einen Teil des Objektivs auf das zu beobachtende Objekt fällt. Hierbei wird der Beleuchtungsstrahl durch eine optische Einrichtung in den Durchgang zwischen dem Okular und dem Objektiv des Mikroskops eingekoppelt, deren in dem Durchgang liegender Querschnitt klein gegenüber dem Querschnitt des Durchgangs ist. Dadurch wird erreicht, dass auf die Verwendung von Strahlteilerelementen, z. B. dichroitische Spiegel, zur Einkopplung des Beleuchtungslichts verzichtet werden kann. Es kann ein Spezialobjektiv mit integrierten optischen Elementen zur Bereitstellung des Beleuchtungsstrahls bzw. zum Auffangen oder Auskoppeln des Reflexionsstrahls verwendet werden. Alternativ können die genannten optischen Elemente auch in einen Adapter integriert werden, der in den Strahlengang eines bestehenden Mikroskops einsetzbar ist.

### Bezugszeichenliste

- A:: Kreis (Vergrößerungsausschnitt für Figur 2)
- F:: Brennpunkt des Objektivs
- α:: Divergenzwinkel des Beleuchtungsstrahls
- β:: Reflexionswinkel des Beleuchtungsstrahl an der Grenzfläche zwischen Objektträger und Objekt
- a:: Abstand zwischen optischer Achse und Beleuchtungsstrahl
- B, B':: Verschiebung der Umlenkeinheit in radialer Richtung
- D, D':: Verschiebung der Fokussierungslinsen in radialer Richtung
- E, E':: Verschiebung der Umlenkeinheit in axialer Richtung

- 10:: Mikroskop
- 12:: Visuelles Beobachtungssteil
- 14:: Okular
- 16:: Objektiv
- 18:: Mikroskopgehäuse
- 19:: Durchgang
- 20:: Photographisches Beobachtungsteil
- 22:: Kamera
- 24:: Beleuchtungsteil
- 26:: Teildurchlässiger Spiegel
- 28:: Objektivrevolverkopf
- 30:: Revolverdrehachse
- 32:: Adapteraufnahme
- 34:: Träger (für Durchlichtbeleuchtung)
- 36:: Objektträger
- 38:: Objekt
- 40:: Adapter
- 42:: Grenzfläche Objektträger - Objekt
- 44:: Beleuchtungsstrahl
- 45:: Eintrittsebene des Beleuchtungsstrahls
- 46:: Hintere Brennebene des Objektivs
- 48:: Frontlinse des Objektivs
- 50:: Umlenkeinheit zum Einkoppeln des Beleuchtungsstrahls
- 52:: Linse zum Fokussieren des Beleuchtungsstrahls
- 54:: Optische Achse
- 56:: Reflexionsstrahl
- 58:: Absorber
- 60:: Aperturblende im Beleuchtungsstrahl
- 62:: Zusätzliche Apterturblende am Objektiv

- 164:: Lichtquelle
- 166:: Umlenkeinheit zum Auskoppeln des Reflexionsstrahls
- 168:: Linse zum Fokussieren des Reflexionsstrahls
- 170:: Detektor

- 272:: Filterrad
- 274:: Drehachse des Filterrads
- 286:: Okularseitiger Anschluss des Adapters
- 288:: Okularseitiger Anschluss des Objektivs
- 290:: Objektivseitiger Anschluss des Adapters
- 292:: Objektivseitiger Anschluss des Mikroskopgehäuses

- 350:: Ebener Spiegel zum Einkoppeln des Beleuchtungsstrahls
- 366:: Ebener Spiegel zum Auskoppeln des Reflexionsstrahls

- 450:: Gekrümmter Spiegel zum Einkoppeln und Fokussieren des Beleuchtungsstrahls
- 466:: Gekrümmter Spiegel zum Auskoppeln und Fokussieren des Reflexionsstrahls

- 576:: Umlenkeinrichtung umfassend mehrere Umlenkeinheiten
- 678:: Lichtleiter zur Einkopplung des Beleuchtungsstrahls
- 680:: Adapteroptik zur Fokussierung des Beleuchtungsstrahls
- 682:: Lichtleiter zur Auskopplung des Reflexionsstrahls
- 684:: Adapteroptik zur Auskopplung des Reflexionsstrahls

## Patentansprüche

1. TIR-Mikroskop (10) umfassend
- ein Mikroskopgehäuse (18),
- ein eine optische Achse (54) sowie eine Apertur des Mikroskops (10) festlegendes Objektiv (16) aus mindestens einem jeweils mindestens eine Linse (48) umfassenden Linsensystem an einem Ende eines Durchgangs (19) des Mikroskopgehäuses (18),
- wenigstens eine Beobachtungseinrichtung (14, 22), insbesondere ein Okular, an einem anderen Ende des Durchgangs (19),
- eine Beleuchtungseinrichtung (24), deren Beleuchtungslicht wenigstens einen Beleuchtungsstrahl (44) bildet, der durch das Linsensystem verläuft, wobei der wenigstens eine Beleuchtungsstrahl (44) in der der wenigstens einen Beobachtungseinrichtung (14, 22) zugewandten Brennebene (46) des wenigstens einen durchstrahlten Linsensystems (48) reell oder virtuell fokussiert ist und in einem vorgegebenen Winkel (β) zur optischen Achse (54) größer Null auf einen Objektträger (36) auftrifft, welcher im Bereich eines Totalreflexionswinkels bei Auftreffen des Beleuchtungslichts auf eine Grenzfläche zwischen einem zu beobachtenden Objekt und einem Objektträger liegt,
**dadurch gekennzeichnet,**
**dass** der Beleuchtungsstrahl von einer den Durchgang (19) zwischen der dem zu beobachtenden Objekt am nächsten angeordneten Frontlinse (48) des Objektivs (16) und der Beobachtungseinrichtung (14, 22) senkrecht schneidenden Eintrittsebene (45) ausgehend auf die der Beobachtungseinrichtung (14, 22) zugewandte Brennebene (46) des Objektivs (16) fokussiert ist und zwischen der Eintrittsebene und dem Linsensystem im Wesentlichen parallel und mit Abstand zur optischen Achse (54) verläuft, wobei in der Eintrittsebene (45) der fokussierte Beleuchtungsstrahl (44) von einer im Objektivbereich angeordneten optischen Einrichtung bereitgestellt wird, deren innerhalb der durch die nummerische Apertur des Objektivs (16) definierten Objektivöffnung liegender Querschnitt wesentlich kleiner als die Objektivöffnung ist, und die ein den Beleuchtungsstrahl (44) parallel und mit Abstand zur optischen Achse (54) einkoppelndes Umlenkelement (50) umfasst, das in radialer Richtung in Bezug auf die optische Achse (54) verlagerbar ist.

2. Mikroskop (10) nach Anspruch 1,
wobei
der innerhalb der Objektivöffnung liegende Querschnitt der den wenigstens einen von der Eintrittsebene (45) ausgehenden Beleuchtungsstrahl (44) bereitstellenden optischen Einrichtung höchstens halb so groß wie die Objektivöffnung ist.

3. Mikroskop (10) nach Anspruch 1,
wobei
der innerhalb der Objektivöffnung liegende Querschnitt der den wenigstens einen von der Eintrittsebene (45) ausgehenden Beleuchtungsstrahl (44) bereitstellenden optischen Einrichtung höchstens 10% der Objektivöffnung ist.

4. Mikroskop (10) nach Anspruch 1,
wobei
der innerhalb der Objektivöffnung liegende Querschnitt der den wenigstens einen von der Eintrittsebene (45) ausgehenden Beleuchtungsstrahl (44) bereitstellenden optischen Einrichtung höchstens 1% der Objektivöffnung ist.

5. Mikroskop (10) nach Anspruch 1, 2, 3 oder 4,
wobei
die den wenigstens einen von der Eintrittsebene (45) ausgehenden Beleuchtungsstrahl (44) bereitstellende optische Einrichtung außerhalb der optischen Achse (54) des Mikroskops (10) angeordnet ist.

6. Mikroskop (10) nach einem der vorherigen Ansprüche,
wobei
der Divergenzwinkel (α) des wenigstens einen von der Eintrittsebene (45) ausgehenden Beleuchtungsstrahls (44) veränderbar ist.

7. Mikroskop (10) nach Anspruch 6,
wobei
im Strahlengang des wenigstens einen Beleuchtungsstrahls (44) eine verstellbare Aperturblende (60) angeordnet ist.

8. Mikroskop (10) nach Anspruch 6,
wobei
die Brennweite einer den Beleuchtungsstrahl (44) in der der wenigstens einen Beobachtungseinrichtung (14, 22) zugewandten Brennebene (46) fokussierenden optischen Einchrichtung (52) veränderbar ist.

9. Mikroskop (10) nach einem der vorherigen Ansprüche,
wobei
der wenigstens eine Beleuchtungsstrahl (44) im Wesentlichen kohärent ist.

10. Mikroskop (10) nach Anspruch 9,
wobei
wenigstens zwei Beleuchtungsstrahlen (44) im Bereich eines Objekts (38) interferieren.

11. Mikroskop (10) nach einem der Ansprüche 1 - 8,
wobei
der wenigstens eine Beleuchtungsstrahl (44) inkohärent ist.

12. Mikroskop (10) nach einem der vorherigen Ansprüche,
wobei
der im Bereich des Objekts (38) zurückreflektierte Anteil des wenigstens einen Beleuchtungsstrahls (44), der Reflexionsstrahl (56), absorbiert wird.

13. Mikroskop (10) nach Anspruch 12,
mit
wenigstens einen innerhalb der durch die nummerische Apertur des Objektivs (16) definierten Objektivöffnung angeordneten Absorber (58) für den wenigstens einen Reflexionsstrahl (56).

14. Mikroskop (10) nach einem der Ansprüche 1 - 11,
wobei
der im Bereich des Objekts (38) zurückreflektierte Anteil des wenigstens einen Beleuchtungsstrahls (44), der Reflexionsstrahl (56), detektiert wird.

15. Mikroskop (10) nach Anspruch 14,
mit
wenigstens einer innerhalb der durch die nummerische Apertur des Objektivs (16) definierten Objektivöffnung angeordneten Detektionseinrichtung.

16. Mikroskop (10) nach einem der vorherigen Ansprüche,
mit
wenigstens einer innerhalb der durch die nummerische Apertur des Objektivs (16) definierten Objektivöffnung angeordneten Lichtquelle.

17. Mikroskop (10) nach einem der vorherigen Ansprüche,
mit
wenigstens einer innerhalb der durch die nummerische Apertur des Objektivs (16) definierten Objektivöffnung angeordneten Umlenkeinheit (50, 66).

18. Mikroskop (10) nach Anspruch 17,
wobei
der wenigstens eine Beleuchtungsstrahl (44) durch die wenigstens eine Umlenkeinheit (50) eingekoppelt wird.

19. Mikroskop (10) nach Anspruch 17 oder 18,
wobei
der wenigstens eine Reflexionsstrahl (56) durch die Umlenkeinheit (66) ausgekoppelt wird.

20. Mikroskop (10) nach einem der Ansprüche 17, 18 oder 19,
wobei
die wenigstens eine Umlenkeinheit (50, 66) ein Prisma (150, 166) umfasst.

21. Mikroskop (10) nach Anspruch 20,
wobei
sich das Prisma (650, 666) an einen Lichtleiter (678, 682) anschließt.

22. Mikroskop (10) nach einem der Ansprüche 17, 18 oder 19,
wobei
die wenigstens eine Umlenkeinheit (50, 66) einen Spiegel (350, 366) umfasst.

23. Mikroskop (10) nach Anspruch 17, 18 oder 19,
wobei
die wenigstens eine Umlenkeinheit (50, 66) einen gekrümmten Spiegel (450, 466) umfasst.

24. Mikroskop (10) nach einem der Ansprüche 17, 18 oder 19, wobei
die wenigstens eine Umlenkeinheit (50, 66) einen gekrümmten Lichtleiter (778, 782) umfasst.

25. Mikroskop (10) nach einem der Ansprüche 17 - 24,
wobei
eine Umlenkeinrichtung (576) vorgesehen ist, in die wenigstens zwei Umlenkeinheiten (50, 66) integriert sind.

26. Mikroskop (10) nach Anspruch 25,
wobei
die Umlenkeinrichtung (576) angenähert ringförmig ausgebildet und konzentrisch zur optischen Achse (54) des Mikroskops (10) angeordnet ist.

27. Mikroskop (10) nach einem der Ansprüche 17 - 26,
mit
einer Rotationseinrichtung für den Beleuchtungsstrahl (44).

28. Mikroskop (10) nach einem der Ansprüche 17 - 26,
mit
einer Aperturbtende (62) im Durchgang (19) auf der der wenigstens einen Beobachtungseinrichtung (14, 22) zugewandten Seite der Eintrittsebene (45) zur Ausblendung der wenigstens einen Umlenkeinheit aus dem Beobachtungsstrahlengang.

29. Mikroskop (10) nach einem der Ansprüche 17 - 28,
mit
einer bezüglich der Eintrittsebene (45) auf der der wenigstens einen Beobachtungseinrichtung (14, 22) zugewandten Seite angeordneten Filteranordnung (272).

30. Mikroskop (10) nach einem der Ansprüche 1 - 29,
wobei
ein Adapter (40) in einen Durchgang (19) des Mikroskopgehäuses (18) zwischen dem Objektiv (16) und der Beobachtungseinrichtung (14, 22) eingesetzt ist, welcher die wenigstens eine optische Einrichtung umfasst, die den Beleuchtungsstrahl (44) bereitstellt.

31. Mikroskop (10) nach Anspruch 30,
wobei
der Adapter (240) zwischen das Objektiv (16) und den Objektivanschluss des Mikroskopgehäuses (18) eingesetzt ist.

32. Mikroskop (10) nach Anspruch 30,
wobei
der Adapter (40) in eine für andere, insbesondere zur DIC-Mikroskopie verwendete, optische Elemente vorgesehene Aufnahme (32) des Mikroskopgehäuses (18) eingesetzt ist.

33. Mikroskop (10) nach einem der Ansprüche 30 - 32,
wobei
wenigstens eines der in den Ansprüchen 1 - 29 genannten optischen Elemente in den Adapter (40) integriert ist.

34. Mikroskop (10) nach einem der Ansprüche 1 - 29,
mit
einem Objektiv (816, 916, 1016, 1116), das die wenigstens eine optische Einrichtung umfasst, die den Beleuchtungsstrahl (44) bereitstellt.

35. Mikroskop (10) nach Anspruch 34
wobei
wenigstens eines der in den Ansprüchen 1 - 29 genannten optischen Elemente in das Objektiv (816, 916, 1016, 1116) integriert ist.

## Claims

1. A TIR microscope (10) comprising
- a microscope housing (18),
- an optics system (16) at one end of a passage (19) of said microscope housing (18), said optics system (16) comprising at least one lens system which includes at least one lens (48), said optics system (16) determining an optical axis (54) and an aperture of said microscope (10),
- at least one observation device (14, 22), in particular an eyepiece, at another end of said passage (19),
- an illumination device (24) whose illumination light forms at least one illumination beam (44) which passes through said lens system, said at least one illumination beam (44) being actually or virtually focused in the focal plane (46) facing said at least one observation device (14, 22) of said at least one lens system (48) through which said illumination beam (44) passes and striking a microscope slide (36) at a predetermined angle (β) to the optical axis (54) which is greater than zero, said angle being in the range of a total reflection angle when said illumination light strikes an interface between an object to be observed and a microscope slide,
**characterized in that** said illumination beam, starting from a plane of incidence (45) which perpendicularly intersects said passage (19) between the front lens (48) located closest to the object to be detected of the optics system (16) and said observation device (14, 22), is focused in the focal plane (46) facing said at least one observation device (14, 22) of said optics system (16), and between said plane of incidence and said lens system substantially extends parallel to and at a at a distance from the optical axis (54), said focused illumination beam (44) being supplied in the plane of incidence (45) by an optical device which is located in the region of said optics system, which has, in the opening of said optics system defined by the numerical aperture of said optics system (16), a cross section much smaller than said opening of said optics system and which comprises an optical deflection element (50) coupling said illumination beam (44) into said optics system parallel to and at a distance from said optical axis (54), said optical deflection element (50) being displaceable in the radial direction with respect to the optical axis (54).

2. The microscope (10) according to Claim 1, wherein the cross section of said optical device providing said at least one illumination beam (44) starting from said plane of incidence (45), said cross section being situated in the area of said opening of said optics system, is at most half as large as said opening of said optics system.

3. The microscope (10) according to Claim 1, wherein the cross section of said optical device providing said at least one illumination beam (44) starting from said plane of incidence (45), said cross section being situated in the area of said opening of said optics system, is at most 10% of said opening of said optical system.

4. The microscope (10) according to Claim 1, wherein the cross section of said optical device providing said at least one illumination beam (44) starting from said plane of incidence (45), said cross section being situated in the area of said opening of said optics system, is at most 1% of said opening of said optics system.

5. The microscope (10) according to Claims 1, 2, 3 or 4, wherein said optical device providing said at least one illumination beam (44) starting from said plane of incidence (45) is situated outside of the optical axis (54) of said microspcope (10).

6. The microscope (10) according to any one of the preceding claims, wherein the divergence angle (α) of said at least one illumination beam (44) starting from said plane of incidence (45) is variable.

7. The microscope (10) according to Claim 6, wherein an adjustable aperture diaphragm (60) is arranged in the beam path of said at least one illumination beam (44).

8. The microscope (10) according to Claim 6, wherein the focal length of an optical device (52) focusing said illumination beam (44) in said focal plane (46) facing said at least one observation device (14, 22) is variable.

9. The microscope (10) according to any one of the preceding claims, wherein said at least one illumination beam (44) is essentially coherent.

10. The microscope (10) according to Claim 9, wherein at least two illumination beams (44) cause interference in the region of an object (38).

11. The microscope (10) according to any one of Claims 1 through 8, wherein said at least one illumination beam (44) is incoherent.

12. The microscope (10) according to any one of the preceding claims, wherein the fraction of said at least one illumination beam (44) reflected back in the region of said object (38), i.e., the reflected beam (56), is absorbed.

13. The microscope (10) according to Claim 12 comprising at least one absorber (58) for said at least one reflected beam (56) in the opening of said optics system defined by the numerical aperture of said optics system (16).

14. The microscope (10) according to any one of Claims 1 through 11, wherein the fraction of said at least one illumination beam (44) that is reflected back in the region of said object (38), i.e. the reflected beam (56), is detected.

15. The microscope (10) according to Claim 14, comprising at least one detection device in the opening of said optics system defined by the numerical aperture of said optics system (16).

16. The microscope (10) according to any one of the preceding claims, **characterized by** at least one light source in said opening of said optics system defined by the numerical aperture of said optics system (16).

17. The microscope (10) according to any one of the preceding claims, comprising at least one deflecting unit (50, 66) in said opening of said optics system defined by the numerical aperture of said optics system (16).

18. The microscope (10) according to Claim 17, wherein said at least one illumination beam (44) is coupled into said optics system by said at least one deflecting unit (50).

19. The microscope (10) according to Claim 17 or 18, wherein said at least one reflected beam (56) is output out of said optics system by said deflecting unit (66).

20. The microscope (10) according to any one of Claims 17, 18 or 19, wherein said at least one deflecting unit (50, 66) includes a prism (150, 166).

21. The microscope (10) according to Claim 20, wherein said prism (650, 666) is connected to a lightguide (678, 682).

22. The microscope (10) according to any one of Claims 17, 18 or 19, wherein said at least one deflecting unit (50, 66) includes a mirror (350, 366).

23. The microscope (10) according to Claims 17, 18, or 19, wherein said at least one deflecting unit (50, 66) includes a curved mirror (450, 466).

24. The microscope (10) according to any one of the Claims 17, 18 or 19 wherein said at least one deflecting unit (50, 66) includes a curved lightguide (778, 782).

25. The microscope (10) according to any one of Claims 17 through 24, wherein a deflecting device (576) into which at least two deflecting units (50, 66) are integrated is provided.

26. The microscope (10) according to Claim 25, wherein said deflecting device (576) is designed to be approximately ring-shaped and is arranged concentrically with the optical axis (54) of said microscope (10).

27. The microscope (10) according to any one of Claims 17 through 26, comprising a rotational device for said illumination beam (44).

28. The microscope (10) according to any one of Claims 17 through 26, comprising an aperture diaphragm (62) in said passage (19) on the side of said plane of incidence (45) facing said at least one observation device (14, 22), for removing said at least one deflecting unit from the observation beam path.

29. The microscope (10) according to any one of Claims 17 through 28, comprising a filter arrangement (272) facing, with respect to said plane of incidence (45), the side of said at least one observation device (14, 22).

30. The microscope according to any one of Claims 1 through 29, wherein an adapter (40) is inserted into a passage (19) of said microscope housing (18) between said optics system (16) and said observation device (14, 22), said adapter including said at least one optical device which provides said illumination beam (44).

31. The microscope according to Claim 30, wherein said adapter (240) is inserted between said optics system (16) and the optics system connector of said microscope housing (18).

32. The microscope according to Claim 30, wherein said adapter (40) is inserted into a receptacle (32) of said microscope housing (18) which is provided for other optical elements, in particular those used for DIC microscopy.

33. The microscope according to any one of Claims 30 through 32, wherein at least one of the optical elements mentioned in Claims 1 through 29 is integrated into said adapter (40).

34. The microscope (10) according to any one of Claims 1 through 29, wherein said optics system (816, 916, 1016, 1116) includes said at least one optical device which provides said illumination beam (44).

35. The microscope according to Claim 34, wherein at least one of the optical elements mentioned in Claims 1 through 29 is integrated into said optics system (816, 916, 1016, 1116).

## Revendications

1. Microscope (10) TIR comportant
- un boîtier de microscope (18),
- un objectif (16) à une extrémité d'un passage (19) du boîtier de microscope (18), consistant en au moins un système de lentilles comprenant au moins une lentille (48), qui définit un axe optique (54) et une ouverture du microscope (10),
- au moins un dispositif d'observation (14, 22), en particulier un oculaire, à l'autre extrémité du passage (19),
- un dispositif d'éclairage (24), dont la lumière d'éclairage forme au moins un rayon d'éclairage (44) qui circule à travers le système de lentilles, l'au moins un rayon d'éclairage (44) étant focalisé réellement ou virtuellement dans le plan focal (46) de l'au moins un système de lentilles (48) traversé par les rayons, plan focal orienté en direction de l'au moins un dispositif d'observation (14, 22), et qui rencontre sous un angle prédéfini (β), plus grand que zéro, par rapport à l'axe optique (54), un porte-objet (36), lequel se trouve dans la zone d'un angle de réflexion totale lors de l'incidence de la lumière d'éclairage sur une interface entre un objet à observer et un porte-objet,
**caractérisé en ce que**
le rayon d'éclairage partant d'un plan d'entrée (45) coupant perpendiculairement le passage (19) entre la lentille avant (48) de l'objectif (16), disposée le plus près de l'objet à observer, et le dispositif d'observation (14, 22), est focalisé sur le plan focal (46) de l'objectif (16), plan focal orienté en direction du dispositif d'observation (14, 22) et **en ce que** son tracé entre le plan d'entrée et le système de lentilles est substantiellement parallèle et à distance de l'axe optique (54), sachant que dans le plan d'entrée (45), le rayon d'éclairage (44) focalisé est fourni par un dispositif optique disposé dans la zone de l'objectif, dispositif dont la section se trouvant à l'intérieur de l'ouverture de l'objectif définie par l'ouverture numérique de l'objectif (16) est nettement plus petite que l'ouverture de l'objectif, et qui comprend un élément de déviation (50) couplant le rayon d'éclairage (44) parallèlement et à distance de l'axe optique (54), déplaçable dans la direction radiale par rapport à l'axe optique (54).

2. Microscope (10) selon la revendication 1,
dans lequel
la section, se trouvant à l'intérieur de l'ouverture de l'objectif, du dispositif optique mettant à disposition l'au moins un rayon d'éclairage (44) partant du plan d'entrée (45) est au plus la moitié de l'ouverture de l'objectif.

3. Microscope (10) selon la revendication 1,
dans lequel
la section, se trouvant à l'intérieur de l'ouverture de l'objectif, du dispositif optique mettant à disposition l'au moins un rayon d'éclairage (44) partant du plan d'entrée (45) est au plus de 10 % de l'ouverture de l'objectif.

4. Microscope (10) selon la revendication 1,
dans lequel
la section, se trouvant à l'intérieur de l'ouverture de l'objectif, du dispositif optique mettant à disposition l'au moins un rayon d'éclairage (44) partant du plan d'entrée (45) est au plus d'1 % de l'ouverture de l'objectif.

5. Microscope (10) selon les revendications 1, 2, 3 ou 4,
dans lequel
le dispositif optique mettant à disposition l'au moins un rayon d'éclairage (44) partant du plan d'entrée (45) est disposé en dehors de l'axe optique (54) du microscope (10).

6. Microscope (10) selon l'une des revendications précédentes,
dans lequel
l'angle de divergence (α) de l'au moins un rayon d'éclairage (44) partant du plan d'entrée (45) peut être modifié.

7. Microscope (10) selon la revendication 6,
dans lequel
un diaphragme (60) réglable est disposé dans le trajet des rayons de l'au moins un rayon d'éclairage (44).

8. Microscope (10) selon la revendication 6,
dans lequel
la distance focale d'un dispositif optique (52) focalisant le rayon d'éclairage (44) dans le plan focal (46) orienté en direction de l'au moins un dispositif d'observation (14, 22) peut être modifiée.

9. Microscope (10) selon l'une des revendications précédentes,
dans lequel
l'au moins un rayon d'éclairage (44) est essentiellement cohérent.

10. Microscope (10) selon la revendication 9,
dans lequel
au moins deux rayons d'éclairage (44) interfèrent dans la zone de l'objet (38).

11. Microscope (10) selon l'une des revendications 1 à 8,
dans lequel
l'au moins un rayon d'éclairage (44) est incohérent.

12. Microscope (10) selon l'une des revendications précédentes,
dans lequel
la partie de l'au moins un rayon d'éclairage (44) réfléchie dans la zone de l'objet (38), le rayon réfléchi (56), est absorbée.

13. Microscope (10) selon la revendication 12,
avec
au moins un absorbeur (58) pour l'au moins un rayon réfléchi (56), disposé à l'intérieur de l'ouverture de l'objectif définie par l'ouverture numérique de l'objectif (16).

14. Microscope (10) selon l'une des revendications 1 à 11,
dans lequel
la partie de l'au moins un rayon d'éclairage (44) réfléchie dans la zone de l'objet (38), le rayon réfléchi (56), est détectée.

15. Microscope (10) selon la revendication 14,
avec
au moins un dispositif de détection disposé à l'intérieur de l'ouverture de l'objectif définie par l'ouverture numérique de l'objectif (16).

16. Microscope (10) selon l'une des revendications précédentes,
avec
au moins une source de lumière disposée à l'intérieur de l'ouverture de l'objectif définie par l'ouverture numérique de l'objectif (16).

17. Microscope (10) selon l'une des revendications précédentes,
avec
au moins une unité de déviation (50, 66) disposée à l'intérieur de l'ouverture de l'objectif définie par l'ouverture numérique de l'objectif (16).

18. Microscope (10) selon la revendication 17,
dans lequel
l'au moins un rayon d'éclairage (44) est couplé par l'au moins une unité de déviation (50).

19. Microscope (10) selon la revendication 17 ou 18,
dans lequel
l'au moins un rayon réfléchi (56) est découplé par l'unité de déviation (66).

20. Microscope (10) selon l'une des revendications 17, 18 ou 19,
dans lequel
l'au moins une unité de déviation (50, 66) comprend un prisme (150, 166).

21. Microscope (10) selon la revendication 20,
dans lequel
le prisme (650, 666) se trouve en amont d'un conducteur optique (678, 682).

22. Microscope (10) selon l'une des revendications 17, 18 ou 19,
dans lequel
l'au moins une unité de déviation (50, 66) comprend un miroir (350, 366).

23. Microscope (10) selon l'une des revendications 17, 18 ou 19,
dans lequel
l'au moins une unité de déviation (50, 66) comprend un miroir courbe (450, 466).

24. Microscope (10) selon l'une des revendications 17, 18 ou 19,
dans lequel
l'au moins une unité de déviation (50, 66) comprend un conducteur optique courbe (778, 782).

25. Microscope (10) selon l'une des revendications 17 à 24,
dans lequel
un dispositif de déviation (576) est prévu, dans lequel sont intégrées au moins deux unités de déviation (50, 66).

26. Microscope (10) selon la revendication 25,
dans lequel
le dispositif de déviation (576) est configuré à peu près de façon annulaire et est disposé de sorte à être concentrique à l'axe optique (54) du microscope (10).

27. Microscope (10) selon l'une des revendications 17 à 26,
avec
un dispositif de rotation pour le rayon d'éclairage (44).

28. Microscope (10) selon l'une des revendications 17 à 26,
avec
un diaphragme (62) dans le passage (19) sur le côté du plan d'entrée (45) tourné vers l'au moins un dispositif d'observation (14, 22), pour masquer l'au moins une unité de déviation du trajet des rayons d'observation.

29. Microscope (10) selon l'une des revendications 17 à 28,
avec
un arrangement de filtres (272) disposé par rapport au plan d'entrée (45) sur le côté tourné vers l'au moins un dispositif d'observation (14, 22).

30. Microscope (10) selon l'une des revendications 1 à 29,
dans lequel
un adaptateur (40) est inséré dans un passage (19) du boîtier du microscope (18) entre l'objectif (16) et le dispositif d'observation (14, 22), lequel comprend l'au moins un dispositif optique qui met à disposition le rayon d'éclairage (44).

31. Microscope (10) selon la revendication 30,
dans lequel
l'adaptateur (240) est inséré entre l'objectif (16) et le raccord d'objectif du boîtier de microscope (18).

32. Microscope (10) selon la revendication 30,
dans lequel
l'adaptateur (40) est inséré dans un raccord (32) du boîtier de microscope (18) prévu pour d'autres éléments optiques, en particulier utilisés pour la microscopie DIC.

33. Microscope (10) selon l'une des revendications 30 à 32,
dans lequel
au moins un des éléments optiques cités dans les revendications 1 à 29 est intégré dans l'adaptateur (40).

34. Microscope (10) selon l'une des revendications 1 à 29,
avec
un objectif (816, 916, 1016, 1116) qui comprend l'au moins un dispositif optique qui met à disposition le rayon d'éclairage (44).

35. Microscope (10) selon la revendication 34,
dans lequel
au moins un des éléments optiques cités dans les revendications 1 à 29 est intégré dans l'objectif (816, 916, 1016, 1116).
